# FASCICULE DE BREVET EUROPEEN

(11) **EP 2 371 632 B1**
(45) Date de publication et mention de la délivrance du brevet: **22.05.2013**
(21) Numéro de dépôt: 11158397.7
(22) Date de dépôt: 16.03.2011
(51) Int. Cl.: B60S 1/38, B60S 1/52

(54) **Balai d'essuie-glace de type balai plat**
Wischblatt in Flachbalkenbauweise
Wiper blade of the flat-blade type

(30) Priorité: 29.03.2010 FR 1001266
(43) Date de publication de la demande: 05.10.2011
(73) Titulaire: Valeo Systèmes d'Essuyage, 78321 Le Mesnil Saint Denis (FR)
(72) Inventeur: Espinasse, Philippe, 63114, COUDES (FR)
(74) Mandataire: Rosolen-Delarue, Katell

(56) Documents cités:
- WO-A1-2010/006775
- DE-A1- 19 856 279
- FR-A1- 2 894 544
- FR-A1- 2 911 834
- FR-A1- 2 925 001
- US-A1- 2001 004 783

## Description

L'invention concerne un balai d'essuie-glace de véhicule automobile du type balai plat ou "flat-blade" en terminologie anglo-saxonne, comportant un élément de liaison avec un bras d'entraînement qui est monté sur une monture de support.

Dans les structures connues de balai plat, le balai comporte classiquement :
- une monture de support d'orientation principale longitudinale, qui comporte des moyens inférieurs de support d'une raclette d'essuyage et un corps tubulaire d'axe principal longitudinal ;
- un élément structurel, encore appelé vertèbre, en forme de lame horizontale longitudinale, qui est reçu à l'intérieur du corps tubulaire ; et
- un élément de liaison, ou connecteur, du balai avec un bras d'entraînement, qui est monté sur la monture de support.

La vertèbre est réalisée en un matériau élastique, généralement métallique, pour permettre de plaquer la raclette d'essuyage contre la surface vitrée à essuyer.

Dans certains cas, le balai plat est utilisé non seulement pour essuyer la vitre du véhicule, mais aussi pour distribuer du liquide de lavage uniformément sur toute la longueur du balai. Il est alors connu, comme décrit notamment dans le document WO 2010/006775 au nom de la Demanderesse, de doter l'élément de liaison ou connecteur d'une fonction hydraulique de manière à pouvoir acheminer du liquide en provenance d'un réservoir de lave-glace vers le balai. On parle alors de connecteur hydraulique.

Dans tous les cas, la structure d'un balai plat doit être suffisamment simple pour permettre un assemblage aisé, donc à moindre coût, des différents éléments constituant le balai. De plus, étant donné que la vertèbre est un élément structurel destiné à rigidifier la structure du balai, il est essentiel que cette vertèbre soit correctement maintenue à l'intérieur du support, et notamment bloquée en translation.

Selon un mode de réalisation connu, décrit par exemple dans le document WO 2007/068677 au nom de la Demanderesse, l'élément de liaison ou connecteur est réalisé en deux parties symétriques par rapport à un plan longitudinal vertical médian du balai. Les deux parties sont montées sur le corps selon un mouvement transversal postérieurement à l'introduction de la vertèbre dans le support. Le blocage longitudinal est assuré ici grâce à deux ergots transversaux internes portés respectivement par les deux parties symétriques du connecteur, ces ergots coopérant avec deux encoches latérales correspondantes pratiquées dans la vertèbre.

Cependant, un tel mode de réalisation de l'élément de liaison en deux parties augmente la complexité du composant et implique une opération supplémentaire d'assemblage des deux parties de l'élément de liaison lors de leur montage sur la monture de support, qui est relativement complexe.

Dans le but de simplifier la structure précédente, il a été également proposé de remplacer le connecteur en deux parties par un connecteur monobloc. Le Document FR 2 911 834, également au nom de la Demanderesse, décrit un tel connecteur monobloc comportant au moins deux pattes latérales longitudinales, notamment verticales, s'étendant chacune au moins en partie au travers d'une ouverture latérale du corps tubulaire, de manière que lesdites pattes s'étendent transversalement de part et d'autre de la vertèbre. Pour l'assemblage des différents constituants du balai, le connecteur est tout d'abord monté sur le corps tubulaire selon un mouvement de coulissement vers le bas, où il se retrouve bloqué en translation longitudinale par le bord des ouvertures latérales du corps tubulaire. La vertèbre est ensuite insérée longitudinalement à l'intérieur du corps tubulaire jusqu'à sa position finale. Dans cette position, le bord inférieur de chaque patte du connecteur est apte à coopérer avec la vertèbre de manière à réaliser un blocage vertical du connecteur sur la monture de support. Ainsi, la vertèbre réalise le verrouillage vertical du connecteur. En outre, comme décrit dans le balai du document WO 2007/068677 cité précédemment, chaque patte latérale du connecteur comporte un ergot interne qui fait saillie transversalement qui coopère avec une encoche correspondante prévue sur la vertèbre de façon à réaliser un blocage en translation longitudinale de la vertèbre.

Bien que ce système permette de simplifier l'assemblage des composants du balai du fait de l'utilisation d'un connecteur monobloc, la solution décrite reste non satisfaisante en ce qui concerne le blocage en translation longitudinale de la vertèbre.

En outre, dans le connecteur décrit dans ce document, les pattes latérales sont suffisamment fines pour autoriser un léger écartement de celles-ci au moment de l'insertion de la vertèbre dans le corps tubulaire de la monture support et le connecteur. Néanmoins, cette solution n'est pas transposable au cas d'un connecteur hydraulique. En effet, dans ce cas, les pattes latérales du connecteur doivent intégrer également les canaux d'écoulement de liquide permettant d'amener le liquide vers le balai. Il en résulte que les pattes latérales sont relativement épaisses, de sorte qu'il est difficile d'introduire la vertèbre à l'intérieur de l'ensemble pré assemblé monture de support/connecteur sans casser les pattes latérales. Ainsi, pour permettre une insertion de la vertèbre sans risque de casser le connecteur, la profondeur des encoches sur la vertèbre et l'épaisseur des ergots internes correspondant sur le connecteur doivent être très faibles, de sorte que le blocage de la vertèbre en translation longitudinale est insuffisant.

FR-A-2925001 montre le préambule de la revendication 1.

La présente invention a pour but de pallier les inconvénients précédents en proposant une structure à connecteur monobloc, avec ou sans fonction hydraulique, qui est simple à assembler, qui limite les risques de casse du connecteur, tout particulièrement mais non exclusivement dans le cas d'un connecteur hydraulique, et qui garantit à l'usage et durant le cycle de vie du balai, un positionnement et un blocage en translation longitudinale de la vertèbre.

Pour ce faire, la présente invention a pour objet un balai d'essuie-glace de véhicule automobile, comportant :
- une monture de support d'orientation principale longitudinale, qui comporte des moyens inférieurs de support d'une lame d'essuyage et un corps tubulaire d'axe principal longitudinal ;
- un élément, notamment monobloc, de liaison du balai avec un bras d'entraînement, qui est monté sur la monture de support,
- une vertèbre en forme de lame horizontale longitudinale, apte à être montée à l'intérieur du corps tubulaire postérieurement au montage de l'élément notamment monobloc de liaison sur la monture de support;
   l'élément notamment monobloc de liaison comportant au moins deux pattes latérales longitudinales, notamment verticales, s'étendant chacune au moins en partie au travers d'une ouverture latérale du corps tubulaire, de manière que lesdites au moins deux pattes s'étendent transversalement de part et d'autre de la vertèbre après insertion de celle-ci dans le corps tubulaire, caractérisé en ce que, avant montage de ladite vertèbre, il comporte un unique ergot transversal interne porté par l'une des deux pattes latérales, apte à coopérer avec une encoche latérale sur la vertèbre pour permettre un montage de la vertèbre à l'intérieur du corps tubulaire et de l'élément notamment monobloc par translation longitudinale de la vertèbre jusqu'à une position indexée finale dans laquelle ladite encoche est clippée sur ledit ergot, et en ce que la vertèbre est immobilisée en translation dans sa position indexée finale par soudure de la matière dudit ergot dans l'encoche.

L'assemblage du balai comporte alors les opérations successives suivantes :
- Montage de l'élément notamment monobloc de la liaison sur la monture de support par coulissement vers le bas ;
- Insertion de la vertèbre dans le corps tubulaire et l'élément monobloc par translation longitudinale jusqu'à la position indexée finale dans laquelle l'encoche latérale de la vertèbre est clippée sur l'ergot transversal interne ;
- Soudure de la matière de l'ergot transversal interne sur ladite encoche latérale pour immobilisation permanente.

Selon d'autres caractéristiques avantageuses additionnelles liées à la structure du balai :
- chaque patte latérale comprend de préférence une rainure longitudinale interne coopérant chacune avec un bord latéral de la vertèbre pour permettre le guidage en translation de ladite vertèbre jusqu'à la dite position indexée finale.
- préalablement à la soudure, l'ergot transversal interne comporte une rainure interne en alignement avec les rainures internes de la patte latérale correspondante.
- les ouvertures latérales sont conformées de préférence de manière à permettre un blocage longitudinal et un blocage transversal de l'élément monobloc sur le corps de la monture.
- la vertèbre peut comporter en outre une découpe latérale située à l'extrémité de la vertèbre qui est insérée en premier dans le corps tubulaire lors du montage, ladite découpe latérale étant destinée à recevoir un élément d'assemblage d'extrémité qui vient s'emboîter à une extrémité de la monture de support, ladite découpe latérale étant positionnée sur le côté de la lame opposée à celui en contact avec ledit ergot.
- l'élément monobloc de liaison peut être un connecteur hydraulique apte relier un réservoir de liquide de lavage à des rampes d'acheminement de liquide intégrées de part et d'autre du balai, sur au moins une partie de la longueur du balai.
- dans ce cas, l'élément monobloc comporte deux raccords d'entrée, et quatre raccords de sortie aptes à être raccordés par paire aux rampes d'acheminement situées sur un même côté du balai, de part et d'autre de l'élément monobloc et en ce que deux raccords de sortie d'une même paire sont en communication grâce à un canal d'écoulement interne s'étendant à l'intérieur de la patte latérale correspondante de l'élément monobloc.

D'autres caractéristiques et avantages de l'invention apparaîtront à la lecture de la description détaillée qui suit d'un balai d'essuie-glace conforme à un mode de réalisation possible de l'invention, faite en référence aux figures annexées dans lesquelles :
- les figures 1 et 2 représentent une perspective partielle d'un balai conforme à l'invention, selon des vues respectivement éclatée et assemblée;
- la figure 3 est une vue de dessous de l'élément de liaison ou connecteur des figures 1 et 2 ;
- les figures 4a à 4d schématise différentes étapes successives pour le montage de l'élément structurel ou vertèbre dans le connecteur, conformément à l'invention ;
- les figures 5a et 5b sont des vues partielles de dessous montrant la position de la vertèbre par rapport au connecteur pour l'étape d'assemblage final conformément à l'invention.

Dans la description qui va suivre, des éléments identiques, similaires ou analogues seront désignés par les mêmes chiffres de référence.

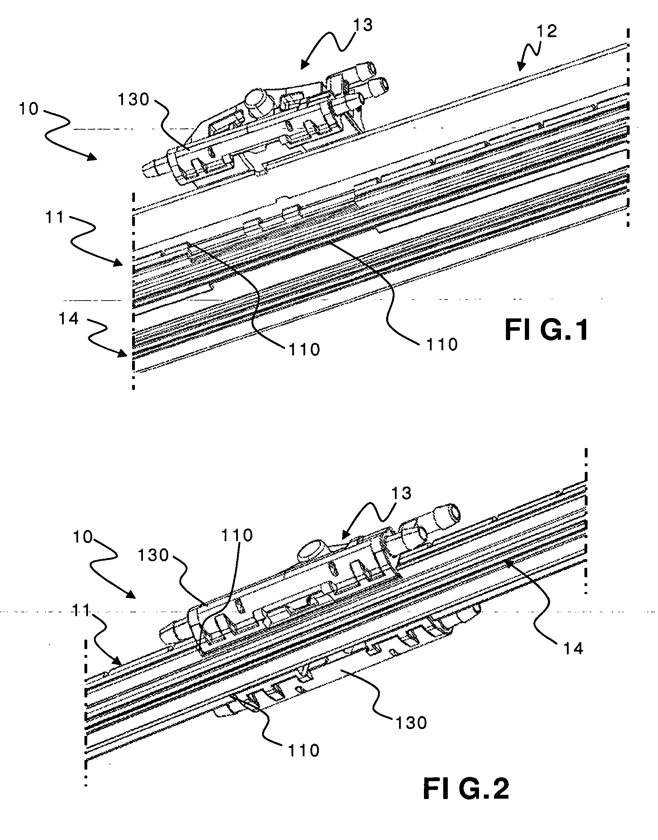

On a représenté sur les figures 1 et 2 un balai d'essuie-glace 10 de type "flat-blade", qui comporte une monture 11 de support d'orientation principale longitudinale, qui porte les autres composants du balai 10, un élément structurel ou vertèbre interne 12 en forme de lame horizontale longitudinale, un élément de liaison ou connecteur monobloc 13 permettant de relier le balai d'essuie-glace 10 à un bras d'entraînement (non représenté) et une lame inférieure d'essuyage 14.

La monture 11 comporte classiquement un corps central tubulaire d'axe principal longitudinal, à l'intérieur duquel la vertèbre 12 s'étend longitudinalement dans la position assemblée (figure 2).

Enfin, la monture 11 de support comporte également des moyens inférieurs de montage de la lame 14 d'essuyage, qui consistent par exemple, à l'instar du balai décrit dans le document FR 2 911 834 précité, en deux crochets inférieurs longitudinaux en vis-à-vis qui délimitent un logement tubulaire ouvert vers le bas, dans lequel un dos supérieur complémentaire de la lame 14 est monté.

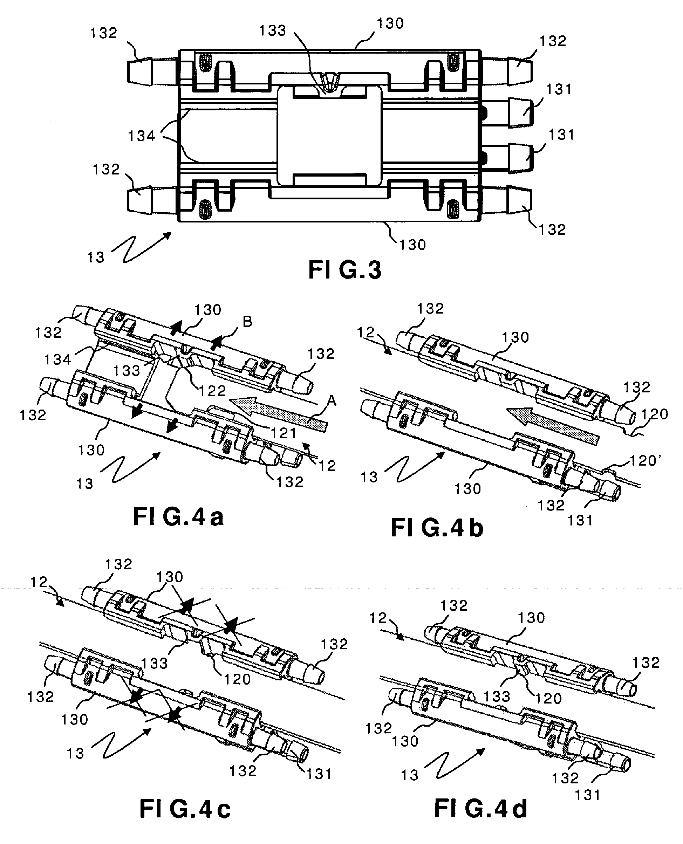

La vertèbre 12 constitue l'élément structurel du balai 10, qui rigidifie la monture 11. La vertèbre 12 est réalisée en un matériau relativement rigide, par exemple en acier, et elle consiste en une lame horizontale longitudinale qui est montée longitudinalement à l'intérieur du corps tubulaire (figure 2). La lame présente une forme standard comportant notamment, comme visible sur la figure 4b, deux encoches latérales 120, 120'. La lame comporte peut comporter en outre une découpe latérale 121 (voir figure 4a) située à l'extrémité de la vertèbre qui est insérée en premier dans le corps tubulaire lors du montage, de manière à recevoir un élément d'assemblage d'extrémité (non représenté) qui vient d'une part, s'emboîter à une extrémité de la monture 11 de support, et d'autre part, se clipper directement sur la vertèbre 12.

L'élément de liaison ou connecteur monobloc 13 est monté sur la monture 11 de support, de manière à être positionné longitudinalement globalement au milieu de la monture 11.

De manière similaire au balai décrit dans le document FR 2 911 834, deux pattes latérales inférieures 130 de l'élément monobloc 13 de liaison coopèrent avec des ouvertures latérales 110 de la monture 11 de support pour permettre le montage. Les ouvertures latérales 110 sont conformées pour permettre une mise en position du connecteur 13 sur la monture support selon un mouvement de coulissement vertical du haut vers le bas. Les ouvertures 110 sont en outre conformées de manière à permettre d'une part, le blocage longitudinal du connecteur 13 sur le corps de la monture 11, et d'autre part, un blocage transversal de ce même connecteur 13 sur le corps de la monture 11.

Dans l'exemple non limitatif donné ici, le connecteur 13 est en outre un connecteur hydraulique, permettant de relier un réservoir de liquide de lavage (non représenté) à des rampes (non visibles) d'acheminement de liquide intégrées de part et d'autre du balai, sur au moins une partie de la longueur du balai. Les rampes sont munies d'une pluralité d'orifices de manière à permettre une distribution du liquide de part et d'autre du balai sur au moins ladite partie de longueur du balai. Le connecteur 13 comporte ainsi deux raccords 131 d'entrée, plus particulièrement visibles sur la figure 3, et quatre raccords de 132 de sortie aptes à être raccordés deux à deux aux rampes d'acheminement situées sur un même côté du balai, de part et d'autre du connecteur 13. Deux raccords 132 de sortie d'une même paire, situés donc d'un même côté du balai, sont en communication grâce à un canal d'écoulement interne (non représenté) s'étendant à l'intérieur de la patte latérale 130 correspondante du connecteur 13, lui-même en communication avec le raccord 131 d'entrée correspondant.

Comme on l'a dit plus haut, pour l'assemblage des composants du balai 10, le connecteur 13 est apte à être monté sur la monture 11 de support selon un coulissement vers le bas. En outre, la vertèbre 12 est apte à être montée dans le corps de la monture 11 de support selon un coulissement longitudinal au travers du corps, la vertèbre étant introduite au niveau d'une extrémité longitudinale (non représenté) du corps, qui est débouchante à cet effet.

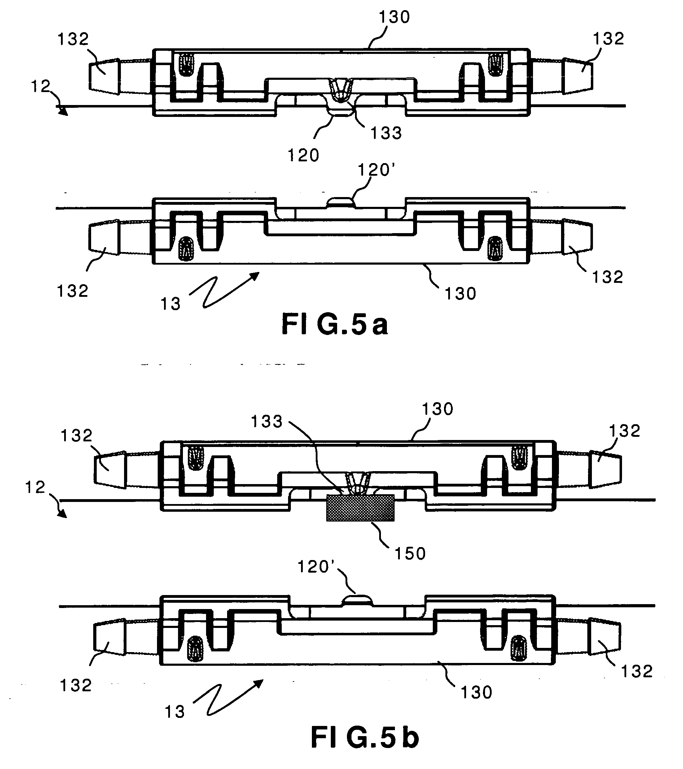

Les caractéristiques particulières de l'invention qui permettent de résoudre le problème technique précité, à savoir un positionnement correct et un bon blocage en translation de la vertèbre, vont à présent être décrites plus particulièrement en référence aux figures 4a à 4b, 5a et 5b. On part de l'hypothèse que le connecteur 13 a déjà été monté sur la monture support par coulissement vers le bas, comme explicité plus haut. Néanmoins, afin de ne pas surcharger les figures, la monture support 11 n'a pas été représentée sur les figures 4a à 5b.

Selon une première particularité de l'invention, le connecteur 13 comporte, avant montage de la vertèbre 12, un unique ergot 133 transversal interne porté par l'une des deux pattes 130 latérales. L'ergot interne 133 fait saillie transversalement par rapport à la face interne de la patte 130, c'est-à-dire qu'il s'étend transversalement en direction de l'autre patte 130 en vis-à-vis. Aussi, l'ergot interne 133 est agencé verticalement sur la patte 130, et s'étend au moins en partie à l'intérieur du logement délimité par le corps. L'ergot interne est destiné à coopérer avec l'encoche 120 latérale sur la vertèbre 12 pour permettre un montage de la vertèbre 12 à l'intérieur du corps tubulaire et de l'élément monobloc par translation longitudinale de la vertèbre jusqu'à une position indexée finale dans laquelle ladite encoche est clippée sur ledit ergot.

Plus précisément, la vertèbre 12 est d'abord introduite à l'intérieur du corps tubulaire et de l'élément monobloc par translation longitudinale de la vertèbre selon la flèche A représentée à la figure 4a. Une rainure longitudinale interne 134 prévue sur chaque patte latérale 130 du connecteur coopère avec un bord latéral de la vertèbre pour permettre le guidage en translation de ladite vertèbre 12 jusqu'à la dite position indexée finale. On remarque que la découpe latérale 121 de la vertèbre est de préférence positionnée sur le côté de la lame opposée à celui destiné à être en contact avec l'ergot 133, ceci afin d'éviter un usinage de l'ergot lors du passage de la vertèbre.

L'opération d'insertion longitudinale de la vertèbre peut s'accompagner d'un léger écartement transversal des pattes latérales 130 comme indiqué par la flèche B (figure 4a), soit grâce à un outil adapté (écartement assisté), soit du seul fait de l'insertion en force de la vertèbre 12. Des essais effectués par la Demanderesse ont en effet montré qu'il était possible, avec un seul ergot, d'écarter les pattes latérales du connecteur et d'introduire la vertèbre sans casser le connecteur, contrairement à ce qui se passe dans les solutions connues où le connecteur présente deux ergots internes.

Pour éviter l'usinage de l'ergot 133 par la lame au moment du passage de celle-ci et permettre une certaine continuité dans le guidage en translation, on peut prévoir que l'ergot 133 transversal interne comporte une rainure interne (non représentée) en alignement avec les rainures internes de la patte latérale correspondante. En variante ou en combinaison, on prévoit avantageusement que la vertèbre 13 présente un profil avant 122 incliné comme visible sur la figure 4a.

L'insertion en translation est poursuivie (figure 4b) jusqu'à la position montré à la figure 4c, dans laquelle l'encoche latérale 120 est juste en arrière de l'ergot 133. Dans le cas où un écartement assisté a été effectué, ce dernier est alors relâché.

L'introduction de la vertèbre sur les dernier millimètres dans le connecteur est ensuite achevée jusqu'à obtention de la position indexée finale montrée sur les figures 4d et 5a, dans laquelle l'encoche 120 de la vertèbre est clippée dans l'ergot 133 du connecteur.

La dernière étape du procédé d'assemblage selon l'invention consiste à immobiliser en translation la vertèbre de façon permanente en effectuant une soudure de la matière de l'ergot dans l'encoche. Cela peut être effectué par une soudure à ultrasons. Cette étape est représentée sur la figure 5b et schématisée par le rectangle référencé 150.

Grâce à l'invention, le balai reste simple à assembler du fait du faible nombre de constituants, et ce sans risque de casse du connecteur. En outre, la vertèbre est correctement positionnée grâce à l'ergot 133 servant d'indexation. Enfin, la vertèbre est définitivement bloquée en translation du fait de la soudure de l'ergot dans l'encoche de la vertèbre.

## Revendications

1. Balai (10) d'essuie-glace de véhicule automobile, comportant :
- une monture (11) de support d'orientation principale longitudinale, qui comporte des moyens inférieurs de support d'une lame (14) d'essuyage et un corps tubulaire d'axe principal longitudinal ;
- un élément, notamment monobloc, (13) de liaison du balai (10) avec un bras d'entraînement, qui est monté sur la monture (11) de support,
- une vertèbre (12) en forme de lame horizontale longitudinale, apte à être montée à l'intérieur du corps tubulaire postérieurement au montage de l'élément, notamment monobloc, (13) de liaison sur la monture (11) de support;
l'élément, notamment monobloc, (13) de liaison comportant au moins deux pattes (130) latérales longitudinales, notamment verticales, s'étendant chacune au moins en partie au travers d'une ouverture (110) latérale du corps tubulaire, de manière que lesdites au moins deux pattes (130) s'étendent transversalement de part et d'autre de la vertèbre (12) après insertion de celle-ci dans le corps tubulaire, **caractérisé en ce que**, avant montage de ladite vertèbre (12), il comporte un unique ergot (133) transversal interne porté par l'une des deux pattes (130) latérales, apte à coopérer avec une encoche (120) latérale sur la vertèbre (12) pour permettre un montage de la vertèbre (12) à l'intérieur du corps tubulaire et de l'élément, notamment monobloc, par translation longitudinale de la vertèbre jusqu'à une position indexée finale dans laquelle ladite encoche (120) est clippée sur ledit ergot (133), et **en ce que** la vertèbre est immobilisée en translation dans sa position indexée finale par soudure de la matière dudit ergot (133) dans l'encoche (120).

2. Balai (10) selon l'une quelconque des revendications précédentes, **caractérisé en ce que** chaque patte (130) latérale comprend une rainure longitudinale interne (134) coopérant chacune avec un bord latéral de la vertèbre pour permettre le guidage en translation de ladite vertèbre (12) jusqu'à la dite position indexée finale.

3. Balai (10) selon la revendication 2, **caractérisé en ce que**, préalablement à la soudure, ledit ergot (133) transversal interne comporte une rainure interne en alignement avec les rainures internes de la patte latérale correspondante.

4. Balai (10) selon l'une quelconque des revendications précédentes, **caractérisé en ce que** les ouvertures latérales (110) sont conformées de manière à permettre un blocage longitudinal et un blocage transversal de l'élément, notamment monobloc, (13) sur le corps de la monture (11).

5. Balai (10) selon l'une quelconque des revendications précédentes, **caractérisé en ce que** la vertèbre (12) comporte en outre une découpe latérale (121) située à l'extrémité de la vertèbre qui est insérée en premier dans le corps tubulaire lors du montage, ladite découpe latérale (121) étant destinée à recevoir un élément d'assemblage d'extrémité qui vient s'emboîter à une extrémité de la monture (11) de support, ladite découpe latérale étant positionnée sur le côté de la lame opposée à celui en contact avec ledit ergot (133).

6. Balai (10) selon l'une quelconque des revendications précédentes, **caractérisé en ce que** l'élément, notamment monobloc, (13) de liaison est en outre un connecteur hydraulique apte relier un réservoir de liquide de lavage à des rampes d'acheminement de liquide intégrées de part et d'autre du balai, sur au moins une partie de la longueur du balai.

7. Balai (10) selon la revendication 6, **caractérisé en ce que** l'élément, notamment monobloc (13) comporte deux raccords (131) d'entrée, et quatre raccords (132) de sortie aptes à être raccordés par paire aux rampes d'acheminement situées sur un même côté du balai, de part et d'autre de l'élément notamment monobloc (13) et **en ce que** deux raccords (132) de sortie d'une même paire sont en communication grâce à un canal d'écoulement interne s'étendant à l'intérieur de la patte latérale (130) correspondante de l'élément notamment monobloc (13).

8. Procédé d'assemblage du balai (10) d'essuie-glace selon la revendication 1, **caractérisé en ce qu'**il comporte les étapes suivantes :
- Montage de l'élément notamment monobloc (13) de la liaison sur la monture (11) de support par coulissement vers le bas ;
- Insertion de la vertèbre (12) dans le corps tubulaire et l'élément notamment monobloc (13) par translation longitudinale jusqu'à la position indexée finale dans laquelle l'encoche latérale (120) de la vertèbre est clippée sur l'ergot (133) transversal interne ;
- Soudure de la matière de l'ergot (133) transversal interne sur ladite encoche (120) latérale pour immobilisation permanente.

9. Procédé d'assemblage selon la revendication 8, **caractérisé en ce que** l'étape d'insertion de la vertèbre comporte une étape d'écartement assisté des pattes latérales (130).

10. procédé d'assemblage selon l'une quelconque des revendications 8 et 9, **caractérisé en ce que** l'étape de soudure consiste en une soudure à ultrasons.

## Patentansprüche

1. Wischblatt (10) für Kraftfahrzeug, das Folgendes aufweist:
- ein Traggestell (11) mit im Wesentlichen Längsausrichtung, das untere Tragmittel eines Wischelements (14) und einen röhrenförmigen Körper mit Längshauptachse aufweist,
- ein insbesondere einstückiges Element (13) zum Verbinden des Wischblatts (10) mit einem Antriebsarm, der auf das Traggestell (11) montiert ist,
- einen Wirbel (12) in horizontaler Längsblattform, der geeignet ist, um im Inneren des röhrenförmigen Körpers nach der Montage des insbesondere einstückigen Elements (13) zum Verbinden auf das Traggestell (11) montiert zu werden,
wobei das insbesondere einstückige Element (13) zum Verbinden mindestens zwei seitliche insbesondere vertikale Längspratzen (130) aufweist, die sich jeweils mindestens zum Teil durch eine seitliche Öffnung (110) des röhrenförmigen Körpers erstrecken, so dass sich die mindestens zwei Pratzen (130) quer zu beiden Seiten des Wirbels (12) nach dem Einfügen dieses in den röhrenförmigen Körper erstrecken, **dadurch gekennzeichnet, dass** es vor der Montage des Wirbels (12) einen einzigen inneren Querdorn (133) aufweist, der von einer der zwei seitlichen Pratzen (130) getragen wird, der geeignet ist, mit einer seitlichen Kerbe (120) auf dem Wirbel (12) zusammenzuwirken, um eine Montage des Wirbels (12) in dem Inneren des röhrenförmigen Körpers und des insbesondere einstückigen Elements durch Längsverschiebung des Wirbels bis zu einer positionierten Endposition zu erlauben, in der die Kerbe (120) auf den Dorn (133) geclipst ist, und dass der Wirbel in Verschiebung in seiner positionierten Endposition in Verschiebung durch Schweißen des Materials des Dorns (133) in der Kerbe (120) stillgestellt wird.

2. Wischblatt (10) nach Anspruch 1, **dadurch gekennzeichnet, dass** jede seitliche Pratze (130) eine innere Längsrille (134) aufweist, die jeweils mit einem Seitenrand des Wirbels zusammenwirkt, um das Führen in Verschiebung des Wirbels (12) bis zu der positionierten Endposition zu erlauben.

3. Wischblatt (10) nach Anspruch 2, **dadurch gekennzeichnet, dass** der innere Querdorn (133) vor dem Schweißen eine innere Rille in Fluchtung mit den inneren Rillen der entsprechenden seitlichen Pratze aufweist.

4. Wischblatt (10) nach einem der vorhergehenden Ansprüche, **dadurch gekennzeichnet, dass** die seitlichen Öffnungen (110) derart ausgebildet sind, dass sie ein Längsblockieren und ein Querblockieren des insbesondere einstückigen Elements (13) auf dem Körper des Gestells (11) erlauben.

5. Wischblatt (10) nach einem der vorhergehenden Ansprüche, **dadurch gekennzeichnet, dass** der Wirbel (12) ferner einen seitlichen Ausschnitt (121) aufweist, der sich an dem Ende des Wirbels befindet, die zuerst in den röhrenförmigen Körper bei der Montage eingefügt wird, wobei der seitliche Ausschnitt (121) dazu bestimmt ist, ein Endfügeelement aufzunehmen, das sich an einem Ende des Traggestells (11) verschachtelt, wobei der seitliche Ausschnitt auf der Seite des Blatts positioniert ist, das dem gegenüberliegt, das mit dem Dorn (13) in Berührung ist.

6. Wischblatt (10) nach einem der vorhergehenden Ansprüche, **dadurch gekennzeichnet, dass** das insbesondere einstückige Verbindungselement (13) ferner ein hydraulischer Steckverbinder ist, der geeignet ist, einen Waschflüssigkeitsbehälter mit Flüssigkeitsfördererrampen, die zu beiden Seiten des Wischblatts eingebaut sind, auf wenigstens einem Teil der Länge des Wischblatts zu verbinden.

7. Wischblatt (10) nach Anspruch 6, **dadurch gekennzeichnet, dass** das insbesondere einstückige Element (13) zwei Eingangsanschlüsse (131) und vier Ausgangsanschlüsse (132) aufweist, die geeignet sind, gepaart an die Fördererrampen zu beiden Seiten des insbesondere einstückigen Elements (13) angeschlossen zu werden, und dass die zwei Ausgangsanschlüsse (132) eines selben Paares dank eines inneren Strömungskanals, der sich im Inneren der entsprechenden seitlichen Pratze (130) des insbesondere einstückigen Elements (13) erstreckt, in Verbindung sind.

8. Verfahren zum Zusammenfügen des Wischblatts (10) nach Anspruch 1, **dadurch gekennzeichnet, dass** es die folgenden Schritte aufweist:
- Montage des insbesondere einstückigen Verbindungselements (13) auf das Traggestell (11) durch Schieben nach unten,
- Einfügen des Wirbels (12) in den röhrenförmigen Körper und das insbesondere einstückige Element (13) durch Längsverschiebung bis zu der positionierten Endposition, in der die seitliche Kerbe (120) des Wirbels auf den inneren Querdorn (133) geclipst ist,
- Schweißen des Materials des inneren Querdorns (133) auf die seitliche Kerbe (120) zum dauerhaften Stillstellen.

9. Zusammenfügeverfahren nach Anspruch 8, **dadurch gekennzeichnet, dass** der Einfügeschritt des Wirbels einen unterstützten Abspreizschritt der seitlichen Pratzen (130) aufweist.

10. Zusammenfügeverfahren nach einem der Ansprüche 8 und 9, **dadurch gekennzeichnet, dass** der Schweißschritt aus einer Ultraschallschweißung besteht.

## Claims

1. Vehicle windscreen wiper (10) comprising:
- a support mount (11) of longitudinal main orientation which comprises lower means for supporting a wiper blade (14) and a tubular body of longitudinal main axis;
- an, in particular monoblock, element (13) for connecting the wiper (10) with a driver arm which is mounted on the support mount (11),
- a vertebra (12) in the form of a longitudinal horizontal strip capable of being mounted inside the tubular body subsequent to mounting the, in particular monoblock, connection element (13) on the support mount (11);
the, in particular monoblock, connection element (13) comprising at least two, in particular vertical, longitudinal lateral lugs (130) each extending at least in part through a lateral opening (110) of the tubular body in such a way that the said at least two lugs (130) extend transversely on either side of the vertebra (12) after insertion of the latter into the tubular body, **characterized in that**, before mounting the said vertebra (12), the wiper comprises a single internal transverse pin (133) carried by one of the two lateral lugs (130) that is able to cooperate with a lateral notch (120) on the vertebra (12) to allow a mounting of the vertebra (12) inside the tubular body and the, in particular monoblock, element by longitudinal translation of the vertebra as far as a final indexed position in which the said notch (120) is clipped onto the said pin (133), and **in that** the vertebra is immobilized in translation in its final indexed position by welding the material of the said pin (133) in the notch (120).

2. Wiper (10) according to Claim 1, **characterized in that** each lateral lug (130) comprises an internal longitudinal groove (134) each cooperating with a lateral edge of the vertebra so as to allow the said vertebra (12) to be guided in translation as far as the said final indexed position.

3. Wiper (10) according to Claim 2, **characterized in that**, prior to welding, the said internal transverse pin (133) comprises an internal groove in alignment with the internal grooves of the corresponding lateral lug.

4. Wiper (10) according to any one of the preceding claims, **characterized in that** the lateral openings (110) are configured so as to allow a longitudinal locking and a transverse locking of the, in particular monoblock, element (13) on the body of the mount (11).

5. Wiper (10) according to any one of the preceding claims, **characterized in that** the vertebra (12) additionally comprises a lateral cutout (121) situated at the end of the vertebra which is inserted first into the tubular body during mounting, the said lateral cutout (121) being intended to receive an end assembly element which is fitted to an end of the support mount (11), the said lateral cutout being positioned on the side of the strip opposed to that in contact with the said pin (133).

6. Wiper (10) according to any one of the preceding claims, **characterized in that** the, in particular monoblock, connection element (13) is additionally a hydraulic connector capable of connecting a washing liquid reservoir to liquid feed manifolds integrated on either side of the wiper, over at least part of the length of the wiper.

7. Wiper (10) according to Claim 6, **characterized in that** the, in particular monoblock, element (13) comprises two inlet couplings (131), and four outlet couplings (132) able to be connected in pairs to the feed manifolds situated on the same side of the wiper, on either side of the, in particular monoblock, element (13), and **in that** two outlet couplings (132) of the same pair are in communication by means of an internal flow duct extending inside the corresponding lateral lug (130) of the, in particular monoblock, element (13).

8. Method for assembling the windscreen wiper (10) according to Claim 1, **characterized in that** it comprises the following steps:
- mounting the, in particular monoblock, connection element (13) on the support mount (11) by sliding downwardly;
- inserting the vertebra (12) into the tubular body and the, in particular monoblock, element (13) by longitudinal translation as far as the final indexed position in which the lateral notch (120) of the vertebra is clipped onto the internal transverse pin (133);
- welding the material of the internal transverse pin (133) on the said lateral notch (130) for permanent immobilization.

9. Assembly method according to Claim 8, **characterized in that** the step of inserting the vertebra comprises a step of assisted moving-apart of the lateral lugs (130).

10. Assembly method according to either one of Claims 8 and 9, **characterized in that** the welding step consists of an ultrasonic welding.
